# EUROPÄISCHE PATENTSCHRIFT

(11) **EP 2 662 868 B1**
(45) Veröffentlichungstag und Bekanntmachung des Hinweises auf die Patenterteilung: **21.12.2016**
(21) Anmeldenummer: 13166699.2
(22) Anmeldetag: 06.05.2013
(51) Int. Cl.: G01D 5/165, H01C 10/40

(54) **Mehrgang-Potentiometer zur Messung eines Drehwinkels**
Multi-turn potentiometer for measuring an angle of rotation
Potentiomètre multitours pour la mesure d'un angle de rotation

(30) Priorität: 07.05.2012 CH 6312012
(43) Veröffentlichungstag der Anmeldung: 13.11.2013
(73) Patentinhaber: Contelec AG, 2503 Biel (CH)
(72) Erfinder: Schnorr, Daniel, 2564 Bellmund (CH); Eggenschwiler, Stefan, 4574 Nennigkofen (CH)
(74) Vertreter: Rentsch Partner AG

(56) Entgegenhaltungen:
- DE-A1- 1 790 163
- DE-A1- 2 826 786
- DE-A1- 19 526 254
- DE-A1- 19 913 552
- GB-A- 1 189 067
- JP-U- S5 189 136
- US-A- 2 976 507
- US-A- 3 238 488
- US-A- 3 517 368

## Beschreibung

### TECHNISCHES GEBIET

Die Erfindung bezieht sich auf ein Mehrgang-Potentiometer zur Messung eines Drehwinkels gemäss Oberbegriff des unabhängigen Patentanspruchs.

### STAND DER TECHNIK

Aus dem Stand der Technik sind Mehrgang-Potentiometer bekannt, um beispielsweise für Steuerungs- oder Regelungszwecke eine Drehstellung zu erfassen. Mehrgang-Potentiometer weisen eine Spindel auf und können als 6-gang, 10-gang, 50-gang, 100-gang oder in einer anderen Weise ausgeführt sein, wobei beispielsweise bei einem 10-gang Potentiometer von einer ersten Endstellung der Spindel bis zu einer zweiten Endstellung 10 volle Umdrehungen zur Verfügung stehen, also eine Winkelsumme von 3600°. Für Steuerungs- oder Regelungszwecke sind bevorzugt Mehrgang-Potentiometer erforderlich, welche eine hohe Präzision aufweisen, also insbesondere eine lineare Kennlinie, eine geringe Hysterese, etc.

Die DE 196 04 650 zeigt einen Wegsensor mit einer radial und axial gelagerten Welle mit einem Gewinde. An der Welle ist ein Abgriffselement angebracht, welches mit dem Gewinde zusammenwirkt, so dass durch Drehen der Welle das Abgriffselement entlang einer Abgriffsbahn verschiebbar ist. Zur axialen und radialen Lagerung ist am Umfang der Welle eine umlaufende Ausnehmung vorgesehen, in die an einem Gehäuse befestigte Federelemente eingreifen. Zur Fixierung der Federelemente ist ein Fixierungsteil vorgesehen. Eine Lagerung mit geringem Axialspiel wird mit einem Gleitelement erreicht, welches in eine am Umfang der Welle radial umlaufende Nut aufgespritzt wird. Zum Ausgleich von Fertigungstoleranzen wird das Gleitelement über ein Federelement im Gehäuse unter einer begrenzten Vorspannung gehalten. Das Gehäuse besteht aus einem Aluminium-Hohlprofil und zwei Endstücken aus Kunststoff.

Die GB 1,064,184 zeigt ein Mehrgang-Potentiometer. In einem Gehäuse ist eine Welle mit darauf aufgesetzter Hohlwelle mit einem Gewinde angeordnet, wobei durch Drehen der Welle ein Abgreifelement entlang einer Widerstandsbahn verschoben wird. Das Gehäuse weist seitlich eine Öffnung auf, in welche die Welle eingeschoben wird, wobei gleichzeitig die Hohlwelle mit dem Gewinde in das Gehäuse eingesetzt wird, um die Hohlwelle mit dem Gewinde auf die Welle aufzusetzen. Das Gehäuse ist mit einem Deckel mit daran angebrachter Widerstandsbahn verschlossen, wobei das Abgreifelement zwischen der Hohlwelle mit dem Gewinde und der Widerstandsbahn derart angeordnet ist, dass sich das Abgreifelement durch Drehen der Welle entlang der Widerstandsbahn verschiebt.

Die US 4,021,768 zeigt ein Mehrgang-Potentiometer. In einem Gehäuse ist in einer seitlichen Öffnung eine Welle eingesetzt. Die Welle weist ein Gewinde auf. Das Gehäuse ist durch einen Deckel mit daran angebrachter Widerstandsbahn verschlossen, wobei sich zwischen dem Deckel und der Widerstandsbahn ein Abgreifelement befindet, welches sich durch Drehen der Welle entlang der Widerstandsbahn verschiebt.

Die US 3,238,488 zeigt einen Trimmer. Ein Gehäuseteil weist eine Aufnahme für einen Schaft und für einen Widerstandsträger auf. Das Gehäuseteil ist mit einem Deckel verschliessbar. Am Schaft ist ein verschiebbar angebrachtes Schraubenteil vorgesehen. Das Schraubenteil wirkt mit einer Zahnstange des Gehäuseteils zusammen, wobei durch Drehung des Schafts ein Abgreifelement entlang dem Widerstandsträger verschoben wird. Am Widerstandsträger sind ein Leiter und ein Widerstandselement angebracht. Das Abgreifelement erstellt eine elektrische Verbindung dazwischen.

Die US 2,976,507 zeigt einen Trimmer. An einer Spindel ist ein Abgreifelement geführt, das bei Drehung der Spindel entlang einem Widerstandselement und einem Kollektorelement verschoben wird. Das Abgreifelement ist zwischen dem Widerstandselement und dem Kollektorelement geführt.

Die GB 1,189,067 zeigt einen Trimmer. An einem Gehäuse ist eine Spindel gelagert. An der Spindel ist ein Abgreifelement geführt. Durch Drehung der Spindel wird das Abgreifelement entlang einem Träger mit einem Widerstandselement und einem Kollektorelement geführt. Der Träger ist auf einer Basis abgestützt, mit welcher das Gehäuse verschlossen ist.

Die DE 28 26 786 zeigt ein Eingang-Präzisionspotentiometer mit ringförmigen Schleiferbahnen. Bei endmontiertem Potentiometer ist ein Linearisierungsvorgang durch einen Fräser ermöglicht.

### DARSTELLUNG DER ERFINDUNG

Eine Aufgabe der Erfindung besteht darin, ein Mehrgang-Potentiometer zur Messung eines Drehwinkels vorzuschlagen, welcher mindestens gewisse Nachteile des Standes der Technik vermeidet oder gegenüber diesem Verbesserungen aufweist. Es ist insbesondere eine Aufgabe der Erfindung ein Mehrgang-Potentiometer zur Messung eines Drehwinkels vorzuschlagen, welches eine hohe Genauigkeit aufweist und kostengünstig herstellbar ist.

Diese Aufgabe wird durch die in den unabhängigen Patentansprüchen definierten Merkmale gelöst.

Ein Mehrgang-Potentiometer zur Messung eines Drehwinkels umfasst ein erstes Gehäuseteil, welches bevorzugt aus einem einzelnen Stück besteht. Das erste Gehäuseteil ist derart eingerichtet, dass in einer Halterungseinrichtung ein Träger für ein Widerstandselement gehaltert ist und dass in einer Lagereinrichtung eine Spindel mit einem daran angebrachten Abgreifelement gelagert ist, wobei der Träger, die Spindel und das Abgreifelement derart ausgeführt sind, dass das Abgreifelement durch Drehung der Spindel entlang dem Träger verschiebbar ist, wobei das Abgreifelement mit dem Widerstandselement des Trägers zusammenwirkt. Das Zusammenwirken zwischen dem Abgreifelement und dem Widerstandselement erfolgt bevorzugt mit einem Schleifer, mit welchem insbesondere ein Spannungswert des als unbelasteter Spannungsteiler beschalteten Potentiometers beeinflusst wird. Bei einer Widerstandsmessung würde der nicht konstante Übergangswiderstand des Schleifers mitgemessen. Die Drehstellung der Spindel entspricht einer Stellung des Abgreifelements und somit einem spezifischen Widerstandswert des Widerstandselement. Somit ergibt sich durch die Messung eines Widerstandswerts des Widerstandselements die Drehstellung oder der Drehwinkel der Spindel. Eine Widerstandsmessung kann in hoher Genauigkeit erfolgen und ermöglicht die Messung des Drehwinkels in hoher Genauigkeit. Das Mehrgang-Potentiometer ist einfach im Zusammenbau und deshalb kostengünstig herstellbar. Da der Träger mit dem Widerstandselement und die Spindel in demselben Gehäuseteil angebracht sind, ist deren relative Position zueinander genau definiert, wodurch die Genauigkeit bei der Messung eines Drehwinkels günstig beeinflusst wird.

In Ausführungsform umfasst das Mehrgang-Potentiometer ein zweites Gehäuseteil, welches bevorzugt aus einem einzelnen Stück besteht, wobei das zweite Gehäuseteil derart eingerichtet ist, das es mit dem ersten Gehäuseteil eine Kapselung bildet, insbesondere zur Kapselung des Trägers und der Spindel mit dem daran angebrachten Abgreifelement. Das zweite Gehäuseteil ist ferner insbesondere derart ausgeführt ist, dass die Halterungseinrichtung des ersten Gehäuseteils zur Halterung des Trägers und/oder die Lagereinrichtung des ersten Gehäuseteils zur Lagerung der Spindel im Wesentlichen ergänzt werden, insbesondere spiegelbildlich durch eine Halterungseinrichtung des zweiten Gehäuseteils resp. durch eine Lagereinrichtung des zweiten Gehäuseteils. Durch die Kapselung mit einem ersten und einem zweiten Gehäuseteil wird das Mehrgang-Potentiometer geschützt und der Träger sowie die Spindel mit dem daran angebrachten Abgreifelement werden fixiert. Dadurch wird die Genauigkeit des Mehrgang-Potentiometers weiter verbessert, insbesondere auch durch die sich ergänzenden Halterungseinrichtungen und Lagereinrichtung der Gehäuseteile. Die beiden Gehäuseteile weisen beispielsweise zudem sich ergänzende Nuten und Nocken auf, so dass ein einfacher und rascher Zusammenbau weiter unterstützt ist, wodurch sich eine kostengünstige Herstellung des Mehrgang-Potentiometers ergibt.

In einer Ausführungsform weist die Lagereinrichtung des ersten Gehäuseteils des Mehrgang-Potentiometers zur radialen Lagerung der Spindel mindestens eine im Wesentlichen halb-zylinderförmige Ausnehmung auf, in welcher im Wesentlichen ein halber Umfang der Spindel gelagert ist, wobei insbesondere eine erste Lagereinrichtung und eine zweite Lagereinrichtung vorgesehen sind, welche im Wesentlichen halb-zylinderförmige Ausnehmung aufweisen und in einem Abstand derart zueinander angeordnet sind, dass das Abgreifelement weitgehend entlang dem gesamten Träger verschiebbar ist. Die Lagerung der Spindel erfolgt beispielsweise im Bereich der Enden der Spindel, so dass eine besonderes stabile radiale Lagerung insbesondere in Bezug auf den Träger besteht. Die halb-zylinderförmigen Ausnehmungen ermöglichen ein einfaches Einsetzen der Spindel und damit eine kostengünstige Herstellung des Mehrgang-Potentiometers gewährleistet ist.

In einer Ausführungsform weist die Spindel des Mehrgang-Potentiometers eine umlaufende Nut auf, in welche zur axialen Lagerung der Spindel ein Nocken eingreift, welcher am ersten Gehäuseteil und/oder gegebenenfalls am zweiten Gehäuseteil angeformt ist. Die umlaufende Nut ist insbesondere in die Spindel eingefräst. Die Breite des Nockens ist nur um soviel kleiner als die Breite der umlaufenden Nut, dass zugleich die Drehung der Spindel und die axiale Lagerung sichergestellt ist. Die umlaufende Nut und der Nocken sind vorzugsweise im Bereich der Lagereinrichtung angebracht, beispielsweise ist der Nocken an einer halb-zylinderförmigen Ausnehmung angeformt. Somit wird durch die Lagereinrichtung sowohl eine zuverlässige radiale als auch eine zuverlässige axiale Lagerung bereitgestellt, wobei ein einfaches Einsetzen der Spindel ermöglicht und damit eine kostengünstige Herstellung des Mehrgang-Potentiometers gewährleistet ist.

In einer Ausführungsform weist das erste Gehäuseteil oder das zweite Gehäuseteil, insbesondere das erste Gehäuseteil, des Mehrgang-Potentiometers eine Kabelführung auf, welche insbesondere U-förmig ausgebildet ist, zur Zugentlastung eines am Träger angebrachten elektrischen Anschlusskabels. Die Kabelführung ermöglicht einen Anschluss des auf dem Träger angeordneten Widerstandselement. Durch die Zugentlastung ist sichergestellt, dass bei Zugkräften am Anschlusskabel am Mehrgang-Potentiometer keine Beschädigungen auftreten. Die Kabelführung ist insbesondere am ersten Gehäuseteil zugänglich und wird vom zweiten Gehäuseteil verschlossen. Dadurch ergibt sich eine einfache Montage und damit eine kostengünstige Herstellung des Mehrgang-Potentiometers.

In einer Ausführungsvariante weist der Träger des Mehrgang-Potentiometers eine Widerstandsbahn und eine Kollektorbahn auf, wobei das Abgreifelement eine elektrische Verbindung zwischen der Widerstandsbahn und der Kollektorbahn erstellt. Der Träger ist beispielsweise als rechteckiges Substrat ausgeführt, welches eine kurze und eine lange Seite aufweist. In Richtung der langen Seite sind auf der Plattenfläche eine Widerstandsbahn und eine Kollektorbahn angebracht, welche insbesondere parallel ausgeführt sind und sich im Wesentlichen über die gesamte Länge der Plattenfläche erstrecken. Das Abgreifelement weist ein Schleifelement auf, welches die Widerstandsbahn mit der Kollektorbahn elektrisch verbindet. An einer kurzen Seite des Substrats kann somit an den Enden der Widerstandsbahn und der Kollektorbahn ein Widerstand gemessen werden, welcher von der Position des Abgreifelements resp. des Drehwinkels bzw. der Drehstellung der Spindel abhängt. Die Widerstandsmessung ermöglicht es, den Drehwinkel bzw. die Drehstellung der Spindel mit einer hohen Genauigkeit zu ermitteln. Da die Widerstandsbahn und die Kollektorbahn auf dem Träger aufgebracht ist und der Schleifer beispielsweise am Abgreifelement in irgendeiner Weise befestigt werden kann, beispielsweise durch Klebung, lässt sich das Mehrgang-Potentiometer zudem einfach zusammenbauen und deshalb kostengünstig herstellen.

In einer Ausführungsvariante weist der Träger des Mehrgang-Potentiometers eine Widerstandsbahn und eine Kollektorbahn auf, wobei bei fehlendem zweitem Gehäuseteil die Widerstandsbahn wenigstens teilweise zugänglich sind, um insbesondere durch das Entfernen von Teilen der Widerstandsbahn eine Linerarisierung vorzunehmen, insbesondere durch Entfernen von Teilen mit einem Laser. Bei fehlendem zweitem Gehäuseteil ragt der Träger beispielsweise aus dem ersten Gehäuseteil etwas heraus, wodurch Teile der Widerstandsbahn zugänglich sind. Zum Linearisieren des Mehrgang-Potentiometers wird die Spindel in verschiedene Drehstellungen gebracht und jeweils der gemessene Widerstandswert mit einem Sollwert verglichen. Bei einer Abweichung des Widerstandswert vom Sollwert ist beispielweise eine Lasereinrichtung vorgesehen, um Teile der Widerstandbahn zu entfernen, beispielsweise indem durch die Einwirkung von Hitze Teile der Widerstandsbahn zerstört werden, wobei sich der gemessene Widerstandswert verändert. Der Sollwert kann beispielsweise gemäss einer Linearisierungstabelle definiert sein. Um die Linearisierung durchzuführen, kann der Träger auch aus dem ersten Gehäuseteil entfernt werden, die notwendigen Linearisierungsschritte wie z.B. das Entfernen von Teilen der Widerstandsbahn durchgeführt und dann der Träger wieder eingesetzt werden. Bei einem in dieser Weise durchgeführtem Linearisieren des Potentiometers wird der Widerstandswert gemessen, und nicht wie bei der Anwendung des Potentiometers ein Spannungswert.

In einer Ausführungsvariante sind das erste Gehäuseteil und das zweite Gehäuseteil des Mehrgang-Potentiometers eingerichtet sind, um diese durch Ultraschallverschweissung miteinander zu verschweissen. Die Ultraschallverschweissung ist schnell und zuverlässig durchführbar. Nach der Verschweissung sind der Träger, die Spindel und das Abgreifelement vor äusseren Einflüssen weitgehend geschützt, wodurch sich eine hohe Genauigkeit und Langlebigkeit des Mehrgang-Potentiometers ergibt.

In einer Ausführungsform weist die Spindel des Mehrgang-Potentiometers ein Gewinde auf, welches mit dem Abgreifelement derart zusammenwirkt, dass durch Drehen der Spindel das Abgreifelement entlang dem Träger verschiebbar ist. Zum Zusammenwirken mit dem Gewinde ist am Abgreifelement insbesondere ein Federelement vorgesehen, welches einen Vorsprung aufweist, der in das Gewinde eingreift. Der Vorsprung wird im Gewinde geführt und dadurch wird das Verschieben des Abgreifelements entlang dem Träger bewirkt. Insbesondere an Endpositionen wird das Federelement aus dem Gewinde automatisch in radialer Richtung hinausgedrückt, wodurch eine Beschädigung des Gewindes und/oder des Abgreifelements vermieden wird.

In einer Ausführungsform weisen das erste Gehäuseteil und/oder gegebenenfalls das zweite Gehäuseteil des Mehrgang-Potentiometers einen ersten Anschlag und/oder einen zweiten Anschlag aufweisen zur Wegbegrenzung des Abgreifelements entlang der Spindel und damit auch entlang dem Träger. Durch die Anschläge wird das Verschieben des Abgreifelements entlang dem Träger beispielsweise auf eine erste Endposition und eine zweite Endposition begrenzt, wobei zum Verschieben zwischen den Endpositionen eine der Gewindesteigung und dem Abstand der Anschläge entsprechende Anzahl Umdrehungen der Spindel erforderlich ist, also sechs Umdrehungen bei einem 6-gang Mehrgang-Potentiometer, zehn Umdrehungen bei einem 10-gang Mehrgang-Potentiometer, etc.

In einer Ausführungsform weisen das erste Gehäuseteil und/oder gegebenenfalls das zweite Gehäuseteil des Mehrgang-Potentiometers einen Flansch auf zur Befestigung des Mehrgang-Potentiometers an einem Verwendungsort, beispielsweise indem der Flansch ein Gewinde aufweist für das Zusammenwirken mit einer Mutter, wobei die Spindel im Bereich des Flansches durch das erste Gehäuseteil und/oder gegebenenfalls das zweite Gehäuseteil hindurchgeführt ist und insbesondere mit einer Dichtung wie beispielsweise einem O-Ring abgedichtet ist. Mit dem Flansch und der herausgeführten Spindel werden eine zuverlässige Verbindung zu einem Teil ermöglicht, dessen Drehwinkel oder Drehstellung beispielsweise erfasst oder überwacht werden soll. Dadurch ergibt sich eine hohe Genauigkeit bei der Messung eines Drehwinkels mit dem Mehrgang-Potentiometer.

In einer Ausführungsvariante sind das erste Gehäuseteil und/oder gegebenenfalls das zweite Gehäuseteil des Mehrgang-Potentiometers als Halbschalen aus Kunststoff in einem Spritzgussverfahren hergestellt. Die Halbschalen können bei kleinen Fertigungstoleranzen sehr kostengünstig hergestellt werden. Insbesondere sind die relativen Dimensionen wie beispielsweise der Abstand zwischen Anschlägen oder der Abstand von einem Anschlag zu einer Halterungseinrichtung für den Träger sehr genau. Das Mehrgang-Potentiometer weist dadurch eine hohe Genauigkeit bei geringen Herstellungskosten auf.

Neben einem Mehrgang-Potentiometer bezieht sich die Erfindung auch auf ein Verfahren zur Herstellung eines Mehrgang-Potentiometers, wobei ein Träger und eine Spindel mit einem daran angebrachten Abgreifelement in ein erstes Gehäuseteil eingesetzt werden, und wobei ein zweites Gehäuseteil mit dem ersten Gehäuseteil stoffschlüssig verbunden wird, insbesondere in einem Schweissverfahren, bevorzugt in einem Ultraschallschweissverfahren. Das Mehrgang-Potentiometer ist in wenigen Schritten herstellbar, wodurch die Herstellungskosten günstig ausfallen.

In einer Ausführungsvariante wird vor dem stoffschlüssigen Verbinden des zweiten Gehäuseteils mit dem ersten Gehäuseteil eine Linearisierung durchgeführt, indem das Abgreifelement entlang einer oder mehrerer Widerstandsbahnen des Trägers verschoben wird, wobei Widerstandswerte erfasst werden, um aufgrund der erfassten Widerstandswerte durch Entfernen von Teilen der einen oder mehreren Widerstandsbahnen das Mehrgang-Potentiometer zu linearisieren, insbesondere durch das Entfernen mit einem Laser. Durch die Linearisierung ergibt sich ein Mehrgang-Potentiometer mit einer sehr hohen Genauigkeit. Die Linearisierung erfordert keinen grossen Aufwand und führt deshalb zu keiner wesentlichen Verteuerung des Mehrgang-Potentiometers.

### KURZE BESCHREIBUNG DER ZEICHNUNGEN

Anhand von Figuren, welche lediglich Ausführungsbeispiele darstellen, wird die Erfindung im Folgenden erläutert. Es zeigen:
- Figur 1: eine perspektivische Ansicht eines Mehrgang-Potentiometer mit einem ersten Gehäuseteil und darin angeordnetem Träger sowie der Spindel mit einem Abgreifelement;
- Figur 1b: eine perspektivische Ansicht einer an der Spindel angebrachten umlaufenden Nut und eines am ersten Gehäuseteil angebrachten Nocken eines MehrgangPotentiometers;
- Figur 2: eine perspektivische Ansicht eines zweiten Gehäuseteil eines Mehrgang-Potentiometers, welches das erste Gehäuseteil im Wesentlichen spiegelbildlich ergänzt; und
- Figur 3: ein Mehrgang-Potentiometer mit zusammengesetzten ersten und zweiten Gehäuseteil.

### WEG(E) ZUR AUSFÜHRUNG DER ERFINDUNG

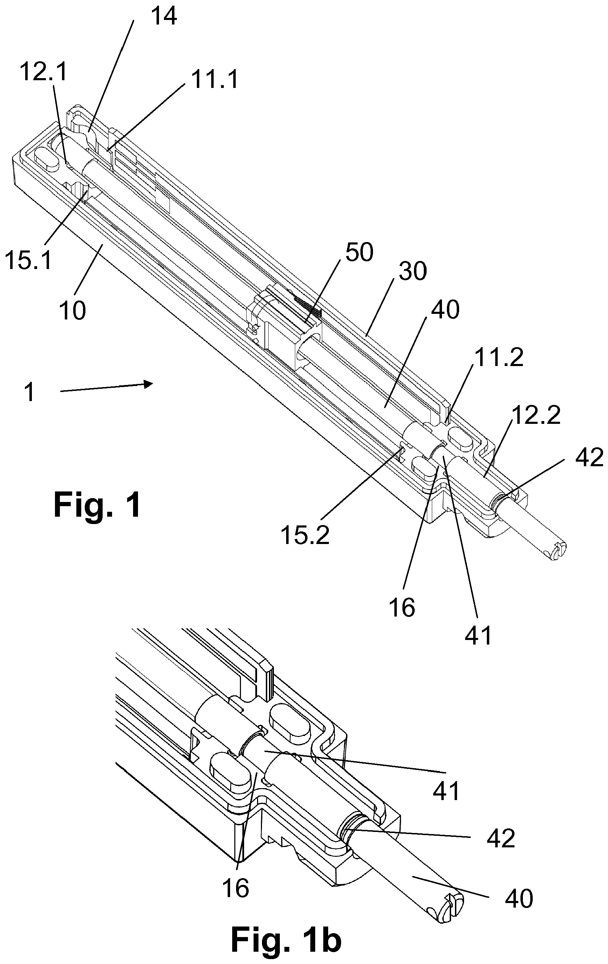

Figur 1 zeigt ein erstes Gehäuseteil 10 eines Mehrgang-Potentiometers 1. Das erste Gehäuseteil 10 besteht aus einem einzelnen Stück und ist beispielsweise in einem Spritzgussverfahren aus Kunststoff hergestellt. In einer Halterungseinrichtung 11.1, 11.2 des ersten Gehäuseteils 1 ist ein Träger 30 für ein Widerstandselement gehaltert. Die Halterungseinrichtung 11.1, 11.2 umfasst beispielsweise eine erste Halterungseinrichtung 11.1 umfassend eine Nut und eine zweite Halterungseinrichtung 11.2 umfassend eine Nut, welche am ersten Gehäuseteil 10 angeformt sind und in welche der Träger 30 eingeführt ist. Der Träger 30 ist beispielsweise als rechteckige Platte ausgeführt, welche zwei kürzere und zwei längere Seiten sowie zwei Plattenflächen aufweist und mit einer längeren Seite voraus senkrecht in das erste Gehäuseteil 10 resp. die Halterungseinrichtung 11.1, 11.2 eingeführt ist. In einer Lagereinrichtung 12.1, 12.2 ist eine Spindel 40 gelagert. Die Lagereinrichtung 12.1, 12.2 umfasst beispielsweise mindestens eine im Wesentlichen halb-zylinderförmige Ausnehmung, welche am ersten Gehäuseteil angeformt ist und in welcher im Wesentlichen ein halber Umfang der Spindel 40 gelagert ist. In einer Ausführungsform sind eine erste im Wesentlichen halb-zylinderförmige Ausnehmung 12.1 und eine zweite im Wesentlichen halb-zylinderförmige Ausnehmung 12.2 vorgesehen, in welchen je ein halber Umfang eines ersten und zweiten Abschnitts der Spindel 40 gelagert sind. Bevorzugt ist das eine Ende der Spindel 40 im Wesentlichen vollständig in der ersten halb-zylinderförmigen Lagereinrichtung 12.1 gelagert, während das andere Ende der Spindel 40 zwar in der zweiten halb-zylinderförmigen Lagereinrichtung 12.2 gelagert, aber durch diese auch hindurchgeführt ist. Dadurch ist die Spindel 40 seitlich an einer Aussenseite des ersten Gehäuseteils zugänglich, insbesondere um die Spindel 40 zu drehen.

An der Spindel 40 ist ein Abgreifelement 50 angebracht, wobei der Träger 30, die Spindel 40 und das Abgreifelement 50 derart ausgeführt sind, dass das Abgreifelement 50 durch Drehung der Spindel 40 entlang dem Träger 30 verschiebbar ist, insbesondere entlang einer Plattenfläche des Trägers 30 in Richtung einer längeren Seite des Trägers 30. Die Spindel 40 weist dazu beispielsweise ein Gewinde auf, welches mit einer am Abgreifelement 50 angebrachten Gewindehülse zusammenwirkt, die beispielsweise zwei Federelemente aufweist, welche in das Gewinde eingreifen. Das Abgreifelement 50 weist an einer dem Träger zugewandten Aussenseite ferner ein Schleiferelement auf, welches auf dem Träger 30 insbesondere derart aufliegt, dass bei einer Drehung der Spindel 40 eine gleichzeitige axiale Drehung des Abgreifelements 50 blockiert ist. Aufgrund des Gewindes der Spindel 40 und der in das Gewinde eingreifenden Federelemente des Abgreifelements 50 ist somit durch Drehung der Spindel 40 das Abgreifelement 50 entlang dem Träger 30 verschiebbar. In einer Ausführungsform sind die Spindel 40 und der Träger 30 beispielsweise im Wesentlichen parallel zueinander ausgerichtet, wobei eine Länge der Spindel 40 eine Strecke auf dem Träger 30 definiert, welche das Schleiferelement des Abgreifelements 50 auf dem Träger 30 zurücklegt. In einer Ausführungsform sind auf dem Träger 30 als Widerstandselement zwei im Wesentlichen parallele Widerstandsbahnen vorgesehen, welche durch das Schleiferelement des Abgreifelements 50 kurzgeschlossen werden. Die Widerstandsbahnen sind insbesondere auf einer Plattenfläche des Trägers 30 in Richtung einer längeren Seite des Trägers 30 angebracht. An einem Ende der Widerstandsbahnen, also insbesondere bei einer kürzeren Seite des Trägers 30, lassen sich über elektrisches Messkontakte, welche mit den Widerstandsbahnen verbunden werden, Widerstandswerte messen, welche von der aktuellen Verschiebung des Abgreifelements 50 abhängen.

Die gemessenen Widerstandswerte ergeben sich durch den Widerstandswert der Strecke zwischen einem elektrischen Messkontakt an der einen Widerstandsbahn und dem Schleiferelement, zuzüglich des Widerstandswerts des Schleiferelements, welcher typischerweise vernachlässigbar ist, zuzüglich des Widerstandswerts der Strecke zwischen dem Schleiferelement und einem elektrischen Messkontakt an der anderen Widerstandsbahn. Die Widerstandsbahnen weisen insbesondere eine konstante Bahnbreite und Bahndicke auf, so dass der Widerstandswert im Wesentlichen linear proportional ist mit der Strecke zwischen den elektrischen Messkontakten und dem Schleiferelement.

Die Drehstellung oder der Drehwinkel der Spindel 40 ist damit einem eindeutigen Widerstandswert zugeordnet. Insbesondere durch die Steigung des Gewindes der Spindel 40 und die Länge des Trägers 30 resp. der darauf angebrachten Widerstandsbahnen ist die Anzahl Umdrehungen definiert, welche mit dem Mehrgang-Potentiometer 1 gemessen werden können. So ist beispielweise ein 6-gang Mehrgang-Potentiometer 1 eingerichtet, dass innerhalb von sechs Umdrehungen der Spindel 40 das Abgreifelement von einer ersten Endposition in eine zweite Endposition verschoben wird. Bei einem 10-gang Mehrgang-Potentiometer 1 sind zehn Umdrehungen erforderlich, bei einem 20-gang Mehrgang-Potentiometer sind zwanzig Umdrehungen erforderlich, usw.

Das erste Gehäuseteil 10 des Mehrgang-Potentiometers 1 besteht wie erwähnt bevorzugt aus einem Stück, beispielsweise aus einem in einem Spritzgussverfahren hergestellten Kunststoffteil. Der Träger 30 und die Spindel 40 mit dem darauf angebrachten Abgreifelement 50 können schnell und einfach in das erste Gehäuseteil 10 eingesetzt werden, wobei die Funktion des Mehrgang-Potentiometers d.h. das Drehen der Spindel 40 und das einer Drehstellung zugeordnete Ermitteln eines Widerstandswerts ermöglicht ist. Das Zusammensetzen des Mehrgang-Potentiometers erfordert somit einen geringen Arbeitsaufwand und das Mehrgang-Potentiometer 1 ist deshalb kostengünstig herstellbar. Aufgrund der vollen Funktionsfähigkeit bei eingesetztem Träger 30 und eingesetzter Spindel 40 ist das Mehrgang-Potentiometer 1 für weitergehende Zwecke wie beispielsweise dem Linearisieren verwendbar, insbesondere da das auf dem Träger 40 angebrachte Widerstandselement in der Form von beispielsweise einer Widerstandsbahn und einer Kollektorbahn zumindest teilweise zugänglich ist. So kann durch das Drehen der Spindel 40 das Abgreifelement 50 von einer ersten Endposition in eine zweite Endposition verschoben werden, wobei zugleich Widerstandswerte erfasst und dem Drehwinkel zugeordnet beispielsweise als Linearisierungstabelle abgespeichert werden. Aufgrund der Linearisierungstabelle kann beispielsweise am zumindest teilweise zugänglichen Widerstandselement eine Linearisierung durchgeführt werden, beispielsweise indem Teile der Widerstandsbahn entfernt werden, insbesondere mit einem Laser.

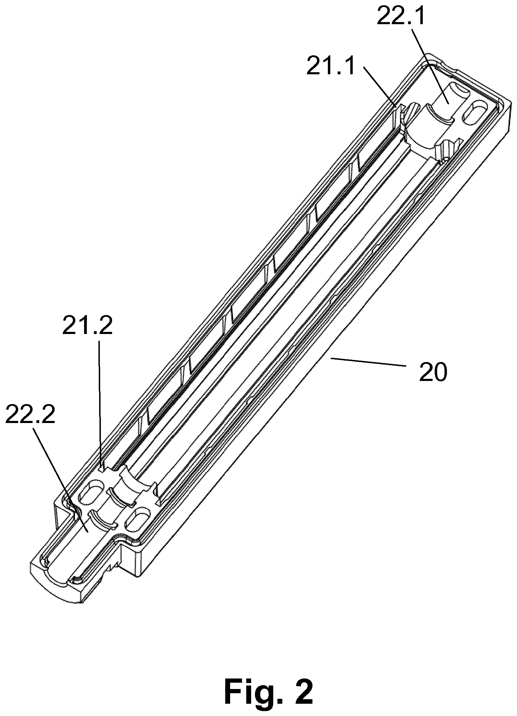

Figur 2 zeigt ein zweites Gehäuseteil 20 eines Mehrgang-Potentiometers 1. Das zweite Gehäuseteil 20 besteht aus einem einzelnen Stück und ist beispielsweise in einem Spritzgussverfahren aus Kunststoff hergestellt. Das zweite Gehäuseteil 20 ist eingerichtet, um mit dem ersten Gehäuse derart zusammenzuwirken, dass das zweite Gehäuseteil 20 mit dem ersten Gehäuseteil 10 eine Kapselung bildet, wobei das zweite Gehäuseteil 20 auf das erste Gehäuseteil 10 aufgesetzt ist. So weist das zweite Gehäuseteil 20 beispielsweise eine Halterungseinrichtung 21.1, 21.2 auf, welche die Halterungseinrichtung 11.1, 11.2 des ersten Gehäuseteils 10 spiegelbildlich ergänzt, so dass der Träger 30 sowohl von der Halterungseinrichtung 21.1, 21.2 des zweiten Gehäuseteils als auch von der Halterungseinrichtung 11.1, 11.2 des ersten Gehäuseteils gehaltert ist. Das zweite Gehäuseteil 20 weist beispielsweise ferner eine Lagereinrichtung 22.1, 22.2 auf, welche die Lagereinrichtung 12.1, 12.2 des ersten Gehäuseteils 10 spiegelbildlich ergänzt, so dass die Spindel 40 sowohl von der Lagereinrichtung 22.1, 22.2 des zweiten Gehäuseteils als auch von der Lagereinrichtung 12.1, 12.2 des ersten Gehäuseteils gelagert ist. Demzufolge weist das zweite Gehäuseteil 20 insbesondere eine erste Nut 21.1, eine zweite Nut 21.2, eine erste halb-zylinderförmige Lagereinrichtung 22.1 sowie eine zweite halb-zylinderförmige Lagereinrichtung 22.2 auf, welch am zweiten Gehäuseteil 20 angeformt sind.

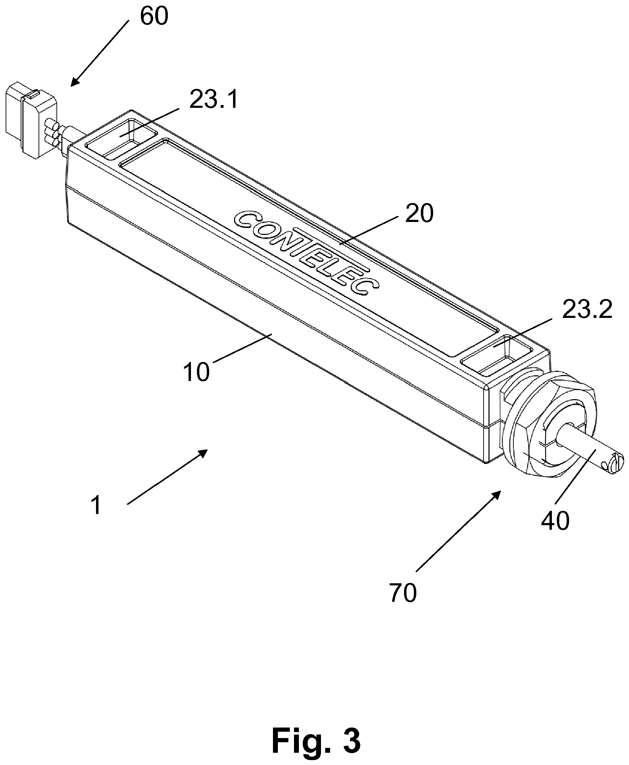

Figur 3 zeigt ein Mehrgang-Potentiometer 1 mit einem ersten Gehäuseteil 10, auf welchem ein zweites Gehäuseteil 20 aufgesetzt ist. Das erste Gehäuseteil 10 und das zweite Gehäuseteil sind beispielsweise stoffschlüssig miteinander verbunden, beispielsweise verklebt, verschweisst oder in einer anderen Weise verbunden. Das erste Gehäuseteil 10 und das zweite Gehäuseteil 20 sind insbesondere durch Ultraschallverschweissung miteinander stoffschlüssig verbunden.

Wie in Figur 3 ersichtlich, ist an einem Ende des Mehrgang-Potentiometers 1 die Spindel 40 herausgeführt, wobei an diesem Ende insbesondere ein Flansch 70 mit einer Mutter und gegebenenfalls einer Unterlagscheibe vorgesehen ist, um das Mehrgang-Potentiometers 1 an einem Verwendungsort, also z.B. an einem Fahrzeug, einem Gabelstapler oder an einem anderen Verwendungsort zu befestigen.

Wie aus Figur 3 ersichtlich, weist das zweite Gehäuseteil 20 auf der Aussenseite des Mehrgang-Potentiometers 1 eine oder mehrere Halterungsöffnungen 23.1, 23.2 auf, welche als Vertiefungen ausgeführt sind und das Gehäuseteil nicht druchstossen. Das erste Gehäuseteil weist beispielsweise in entsprechender Weise eine oder mehrere Halterungsöffnungen 13.1, 13.2 auf. Die Halterungsöffnungen 13.1, 13.2, 23.1, 23.2 sind beispielsweise vorgesehen, um das erste Gehäuseteil 10 und das zweite Gehäuseteil während dem Zusammenbau festzuhalten, indem beispielsweise Nocken einer Greifvorrichtung in entsprechender Weise in die Halterungsöffnungen 13.1, 13.2, 23.1, 23.2 eingreifen.

Wie aus Figur 3 ersichtlich, sind an einem Ende des Mehrgang-Potentiometers elektrische Anschlüsse 60 vorgesehen, um die Messung eines Widerstandswerts durchzuführen. Der gemessene Widerstandswert entspricht wie schon erläutert einer Drehstellung der Spindel 40.

Aus Figur 1 ist eine Anschlusskabelführung 14 ersichtlich, welche insbesondere U-förmig ausgeführt und vorgesehen ist, um ein Anschlusskabel von der Aussenseite des Mehrgang-Potentiometers 1 zum Träger 30 zu führen, so dass insbesondere elektrische Kontakte zu den auf dem Träger 30 angebrachten Widerstandsbahnen erstellt werden können. Die Anschlusskabelführung 14 ist insbesondere eingerichtet, dass sich eine Zugentlastung des Anschlusskabels ergibt. Das Mehrgang-Potentiometer 1 ist dadurch davor geschützt, dass Kräfte, welche durch ein Ziehen am Anschlusskabel entstehen, beispielsweise an die elektrischen Kontaktstellen des Kabels mit den Widerstandsbahnen übertragen werden und sich aufgrund solcher Kräfte eine Veränderung des elektrischen Kontakts mit den Widerstandsbahnen, eine Änderung der gemessenen Widerstandswerte sowie daraus abgeleitet eine Ungenauigkeit bei der Bestimmung einer Drehstellung der Spindel 40 ergibt.

Wie aus Figur 1 und Figur 2 ersichtlich, sind Endanschläge 15.1, 15.2, 25.1, 25.2 vorgesehen, welche genau definierte Endpositionen des Abgreifelements 50 bewirken. Die Endanschläge 15.1, 15.2, 25.1, 25.2 sind auf einer Innenseite des ersten Gehäuseteils 10 und des zweiten Gehäuseteils 20 angeformt, insbesondere im Bereich der ersten und zweiten halb-zylinderförmigen Lagereinrichtungen 12.1, 12.2, 22.1, 22.2. Die Kopplung zwischen einem Gewinde der Spindel 40 und dem Abgreifelement 50 erfolgt wie beschrieben vorzugsweise über ein oder mehrere Federelemente. Bei Berührung des Abgreifelements 50 mit einem Endanschlag 15.1, 15.2, 25.1, 25.2, ist eine weitere Verschiebung des Abgreifelements 50 blockiert. Bei fortwährender Drehung der Spindel 40 wird das Federelement durch die Flanken des Gewindes in radialer Richtung von der Spindel 40 weggestossen, so dass aufgrund des oder der Federelemente eine mechanische Zerstörung des Gewindes 40 oder des Abgreifelements 50 verhindert ist.

Wie aus Figur 1 und Figur 2 ersichtlich, weist die Spindel 40 eine umlaufende Nut 41 auf, in welche ein am ersten Gehäuseteil 10 und/oder am zweiten Gehäuseteil 20 angeformter Nocken 16, 26 eingreift. In Figur 1b ist der entsprechende Ausschnitt in einer vergrösserten Ansicht für das erste Gehäuseteil 10 gezeigt. Die Nocken 16, 26 können derart ausgeformt sein, dass diese die Nut 41 am Umfang umschliessen. In einer Variante sind die Nocken 16, 26 als einzelne quaderförmige Teile angeformt, so dass die Nut 41 am Umfang nur abschnittsweise umschlossen wird. Durch die Nocken 16, 26 wird insbesondere eine genaue axiale Positionierung der Spindel 40 gegenüber dem ersten Gehäuseteil 10 sowie dem zweiten Gehäuseteil 20 erreicht, wodurch eine genaue Positionierung des Abgreifelements 50 gegenüber dem Träger 30 erreicht wird.

Wie aus Figur 1, Figur 1b und Figur 2 ersichtlich, wird die Spindel 40 von einem Innenbereich, welcher den Träger 20 und das Abgreifelement 50 umschliesst, in einen Aussenbereich des Mehrgang-Potentiometers 1 geführt. Zur Bestimmung einer Drehstellung eines Fahrzeugteils, eines Gabelstaplerteils oder eines anderen Teils, wird die so herausgeführte Spindel 40 des Mehrgang-Potentiometers 1 entsprechend mechanisch verbunden. Wie aus Figur 1 oder Figur 1b ersichtlich, ist in diesem beschriebenen Durchführgungsbereich der Spindel 40 eine Dichtung 42, vorzugsweise in Form eines O-Rings vorgesehen.

### BEZUGSZEICHEN

1 Mehrgang-Potentiometer
10 erstes Gehäuseteil
11.1, 11.2 Halterungseinrichtung des ersten Gehäuseteils
12.1, 12.2 Lagereinrichtung des ersten Gehäuseteils
13.1, 13.2 Halterungsöffnungen des ersten Gehäuseteils (in den Figuren nicht ersichtlich)
14 Anschlusskabelführung
15.1, 15.2 Endanschläge des ersten Gehäuseteils
16 Nocken des ersten Gehäuseteils
20 zweites Gehäuseteil
21.1,21.2 Halterungseinrichtung des zweiten Gehäuseteils
22.1,22.2 Lagereinrichtung des zweiten Gehäuseteils
22.1,22.2 Halterungsöffnungen des zweiten Gehäuseteils
25.1,25.2 Endanschläge des zweiten Gehäuseteils
26 Nocke des zweiten Gehäuseteils
30 Träger (für ein Widerstandselement)
40 Spindel
41 umlaufende Nut der Spindel
42 Dichtung
60 elektrische Anschlüsse des Mehrgang-Potentiometers
50 Abgreifelement
70 Flansch

## Patentansprüche

1. Ein Mehrgang-Potentiometer (1) zur Messung eines Drehwinkels, umfassend ein erstes Gehäuseteil (10), welches derart eingerichtet ist, dass in einer Halterungseinrichtung (11.1, 11.2) ein Träger (30) für ein Widerstandselement gehaltert ist und dass in einer Lagereinrichtung (12.1, 12.2) eine Spindel (40) mit einem daran angebrachten Abgreifelement (50) gelagert ist, wobei der Träger (30), die Spindel (40) und das Abgreifelement (50) derart ausgeführt sind, dass das Abgreifelement (50) durch Drehung der Spindel (40) entlang dem Träger (30) verschiebbar ist, wobei das Abgreifelement mit dem Widerstandselement des Trägers (30) zusammenwirkt, wobei der Träger (30) eine Widerstandsbahn und eine Kollektorbahn aufweist, der Träger (30) aus dem ersten Gehäuseteil (10) etwas herausragt, sodass die Widerstandsbahn wenigstens teilweise so zugänglich ist, dass durch Entfernen von Teilen der Widerstandsbahn eine Linearisierung vorgenommen werden kann.

2. Das Mehrgang-Potentiometer (1) nach Anspruch 1, weiter umfassend ein zweites Gehäuseteil (20), wobei das zweite Gehäuseteil (20) derart eingerichtet ist, das es mit dem ersten Gehäuseteil (10) eine Kapselung bildet, wobei das zweite Gehäuseteil (20) derart ausgeführt ist, dass die Halterungseinrichtung (11.1, 11.2) des ersten Gehäuseteils (10) zur Halterung des Trägers (30) und/oder die Lagereinrichtung (12.1, 12.2) des ersten Gehäuseteils (10) zur Lagerung der Spindel (40) im Wesentlichen ergänzt werden.

3. Das Mehrgang-Potentiometer (1) nach Anspruch 1 oder 2, wobei zur radialen Lagerung der Spindel (40) die Lagereinrichtung (11.1, 11.2) des ersten Gehäuseteils (10) mindestens eine im Wesentlichen halb-zylinderförmige Ausnehmung aufweist, in welcher im Wesentlichen ein halber Umfang der Spindel (40) gelagert ist, wobei eine erste Lagereinrichtung (11.1) und eine zweite Lagereinrichtung (11.2) vorgesehen sind, welche im Wesentlichen halb-zylinderförmige Ausnehmung aufweisen und in einem Abstand zueinander derart angeordnet sind, dass das Abgreifelement (50) weitgehend entlang dem gesamten Träger (30) verschiebbar ist.

4. Das Mehrgang-Potentiometer (1) nach einem der Ansprüche 1 bis 3, wobei die Spindel (40) eine umlaufende Nut (41) aufweist, in welche zur axialen Lagerung der Spindel ein Nocken (16, 26) eingreift, welcher am ersten Gehäuseteil (10) und/oder gegebenenfalls am zweiten Gehäuseteil (20) angeformt ist.

5. Das Mehrgang-Potentiometer (1) nach einem der Ansprüche 1 bis 4, wobei das erste Gehäuseteil (10) oder das zweite Gehäuseteil (20) eine Kabelführung aufweist, welche U-förmig ausgebildet ist, zur Zugentlastung eines am Träger (30) angebrachten elektrischen Anschlusskabels.

6. Das Mehrgang-Potentiometer (1) nach einem der Ansprüche 1 bis 5, wobei das Abgreifelement (50) eine elektrische Verbindung zwischen der Widerstandsbahn und der Kollektorbahn erstellt.

7. Das Mehrgang-Potentiometer (1) nach einem der Ansprüche 1 bis 6, wobei die Widerstandsbahn bei fehlendem zweitem Gehäuseteil (20) wenigstens teilweise zugänglich ist, um durch das Entfernen von Teilen der Widerstandsbahn eine Linearisierung vorzunehmen.

8. Das Mehrgang-Potentiometer (1) nach einem der Ansprüche 1 bis 7, wobei bei fehlendem zweiten Gehäuseteil (20) der Träger aus dem ersten Gehäuseteil (10) etwas herausragt und dadurch Teile der Widerstandsbahn zugänglich sind.

9. Das Mehrgang-Potentiometer (1) nach einem der Ansprüche 1 bis 8, wobei das erste Gehäuseteil (10) und das zweite Gehäuseteil (20) eingerichtet sind, um diese durch Ultraschallverschweissung miteinander zu verschweissen.

10. Das Mehrgang-Potentiometer (1) nach einem der Ansprüche 1 bis 9, wobei die Spindel (40) ein Gewinde aufweist, welches mit dem Abgreifelement (50) derart zusammenwirkt, dass durch Drehen der Spindel (40) das Abgreifelement (50) entlang dem Träger (30) verschiebbar ist.

11. Das Mehrgang-Potentiometer (1) nach einem der Ansprüche 1 bis 10, wobei das erste Gehäuseteil (10) und/oder gegebenenfalls das zweite Gehäuseteil (20) einen ersten Anschlag (15.1, 25.1) und/oder einen zweiten Anschlag (15.2, 25.2) aufweisen zur Wegbegrenzung des Abgreifelements (50) entlang der Spindel (40) und damit auch entlang dem Träger (30).

12. Das Mehrgang-Potentiometer (1) nach einem der Ansprüche 1 bis 11, wobei das erste Gehäuseteil (10) und/oder gegebenenfalls das zweite Gehäuseteil (20) einen Flansch (70) aufweisen zur Befestigung des Mehrgang-Potentiometers an einem Verwendungsort.

13. Das Mehrgang-Potentiometer (1) nach einem der Ansprüche 1 bis 1 2, wobei das erste Gehäuseteil (10) und/oder gegebenenfalls das zweite Gehäuseteil (20) als Halbschalen aus Kunststoff in einem Spritzgussverfahren hergestellt sind.

14. Ein Verfahren zur Herstellung eines Mehrgang-Potentiometers (1) nach Anspruch 1 bis 13, wobei ein Träger (30) und eine Spindel (40) mit einem daran angebrachten Abgreifelement (50) in ein erstes Gehäuseteil (10) eingesetzt werden, und wobei ein zweites Gehäuseteil (20) mit dem ersten Gehäuseteil (10) stoffschlüssig verbunden wird.

15. Das Verfahren nach Anspruch 14, wobei vor dem stoffschlüssigen Verbinden des zweiten Gehäuseteils (20) mit dem ersten Gehäuseteil (30) eine Linearisierung durchgeführt wird, indem das Abgreifelement (50) entlang einer oder mehrerer Widerstandsbahnen des Trägers (30) verschoben wird, wobei Widerstandswerte erfasst werden, um aufgrund der erfassten Widerstandswerte durch Entfernen von Teilen der einen oder mehreren Widerstandsbahnen das Mehrgang-Potentiometer (1) zu linearisieren.

## Claims

1. Multi-turn potentiometer (1) for measuring an angle of rotation, comprising a first housing part (10) which is configured in such a way that a carrier (30) for a resistance element is held in a holding device (11.1, 11.2), and that a spindle (40) having a measuring element (50) fitted thereto is supported in a bearing device (12.1, 12.2), the carrier (30), the spindle (40) and the measuring element (50) being designed in such a way that the measuring element (50) can be displaced along the carrier (30) by rotating the spindle (40), wherein the measuring element interacts with the resistance element of the carrier (30), wherein the carrier (30) has a resistance track and a collector track, the carrier (30) projects somewhat out of the first housing part (10), so that the resistance track is at least partly accessible, so that linearization can be performed by removing parts of the resistance track.

2. Multi-turn potentiometer (1) according to Claim 1, further comprising a second housing part (20), wherein the second housing part (20) is configured in such a way that it forms an encapsulation together with the first housing part (10), wherein the second housing part (20) is designed in such a way that the holding device (11.1, 11.2) of the first housing part (10) for holding the carrier (30) and/or the bearing device (12.1, 12.2) of the first housing part (10) for supporting the spindle (40) is/are substantially complemented.

3. Multi-turn potentiometer (1) according to Claim 1 or 2, wherein, for the purpose of radial support of the spindle (40), the bearing device (11.1, 11.2) of the first housing part (10) has at least one substantially semi-cylindrical recess, in which substantially half the circumference of the spindle (40) is supported, wherein a first bearing device (11.1) and a second bearing device (11.2) are provided, which have substantially semi-cylindrical recesses and are arranged at a distance from each other in such a way that the measuring element (50) can be displaced largely along the entire carrier (30).

4. Multi-turn potentiometer (1) according to one of Claims 1 to 3, wherein the spindle (40) has a circumferential groove (41), in which, for the purpose of supporting the spindle axially, there engages a cam (16, 26), which is integrally moulded on the first housing part (10) and/or, if appropriate, on the second housing part (20).

5. Multi-turn potentiometer (1) according to one of Claims 1 to 4, wherein the first housing part (10) or the second housing part (20) has a cable guide which is formed in the shape of a U, for relieving the stress of an electric connecting cable fitted to the carrier (30).

6. Multi-turn potentiometer (1) according to one of Claims 1 to 5, wherein the measuring element (50) produces an electrical connection between the resistance track and the collector track.

7. Multi-turn potentiometer (1) according to one of Claims 1 to 6, wherein, in the absence of the second housing part (20), the resistance track is at least partly accessible, in order to perform linearization by removing parts of the resistance track.

8. Multi-turn potentiometer (1) according to one of Claims 1 to 7, wherein, in the absence of the second housing part (20), the carrier projects somewhat out of the first housing part (10) and, as a result, parts of the resistance track are accessible.

9. Multi-turn potentiometer (1) according to one of Claims 1 to 8, wherein the first housing part (10) and the second housing part (20) are configured to be welded to each other by ultrasonic welding.

10. Multi-turn potentiometer (1) according to one of Claims 1 to 9, wherein the spindle (40) has a thread which interacts with the measuring element (50) in such a way that the measuring element (50) can be displaced along the carrier (30) by rotating the spindle (40).

11. Multi-turn potentiometer (1) according to one of Claims 1 to 10, wherein the first housing part (10) and/or, if appropriate, the second housing part (20) has/have a first stop (15.1, 25.1) and/or a second stop (15.2, 25.2) to limit the travel of the measuring element (50) along the spindle (40) and therefore also along the carrier (30).

12. Multi-turn potentiometer (1) according to one of Claims 1 to 11, wherein the first housing part (10) and/or, if appropriate, the second housing part (20) has/have a flange (70) for fixing the multi-turn potentiometer to a place of use.

13. Multi-turn potentiometer (1) according to one of Claims 1 to 12, wherein the first housing part (10) and/or, if appropriate, the second housing part (20) are produced as half-shells made of plastic in an injection-moulding process.

14. Method for producing a multi-turn potentiometer (1) according to Claims 1 to 13, wherein a carrier (30) and a spindle (40) having a measuring element (50) fitted thereto are inserted into a first housing part (10), and wherein a second housing part (20) is connected to the first housing part (10) by a material connection.

15. Method according to Claim 14, wherein, before the material connection of the second housing part (20) to the first housing part (30), linearization is carried out by the measuring element (50) being displaced along one or more resistance tracks of the carrier (30), resistance values being measured in order to linearize the multi-turn potentiometer (1) by removing parts of one or more resistance tracks on the basis of the resistance values measured.

## Revendications

1. Un potentiomètre multi-tours (1) destiné à mesurer un angle de rotation, comprenant une première partie (10) de boîtier, laquelle est ménagée de telle sorte que dans un système de fixation (11.1, 11.2), il est fixé un support (30) pour un élément de résistance et que dans un système de logement (12.1, 12.2), il est logé une broche (40) avec un élément de capture (50) monté sur celle-ci, le support (30), la broche (40) et l'élément de capture (50) étant réalisés de telle sorte que l'élément de capture (50) soit déplaçable le long du support (30), par rotation de la broche (40), l'élément de capture coopérant avec l'élément de résistance du support (30), le support (30) comportant un trajet de résistance et un trajet de collecteur, le support (30) saillant quelque peu hors de la première partie (10) de boîtier, de sorte que le trajet de résistance soit accessible au moins en partie, de telle sorte que par retrait de parties du trajet de résistance, il puisse être procédé à une linéarisation.

2. Le potentiomètre multi-tours (1) selon la revendication 1, comprenant par ailleurs une seconde partie (20) de boîtier, la seconde partie (20) de boîtier étant ménagée de sorte à former avec la première partie (10) de boîtier un encapsulage, la seconde partie (20) de boîtier étant réalisée de sorte que pour la fixation du support (30), le système de fixation (11.1, 11.2) de la première partie (10) de boîtier et/ou pour le logement de la broche (40), le système de logement (12.1, 12.2) de la première partie (10) de boîtier soient sensiblement complétés.

3. Le potentiomètre multi-tours (1) selon la revendication 1 ou la revendication 2, pour le logement radial de la broche (40), le système de logement (11.1, 11.2) de la première partie (10) de boîtier comportant au moins un évidement de forme sensiblement semi-cylindrique, dans lequel est logée sensiblement une demi-circonférence de la broche (40), un premier système de logement (11.1) et un second système de logement (11.2) étant prévus, lesquels comportent des évidements de forme sensiblement semi-cylindrique et qui sont placés avec un écart mutuel, de telle sorte que l'élément de capture (50) soit largement déplaçable le long de l'ensemble du support (30).

4. Le potentiomètre multi-tours (1) selon l'une quelconque des revendications 1 à 3, la broche (40) comportant une rainure (41) périphérique dans laquelle, pour le logement axial de la broche s'engage une came (16, 26), laquelle est rapportée sur la première partie (10) de boîtier et/ou le cas échéant sur la seconde partie (20) de boîtier.

5. Le potentiomètre multi-tours (1) selon l'une quelconque des revendications 1 à 4, la première partie (10) de boîtier ou la seconde partie (20) de boîtier comportant un passage de câble, lequel est conçu en forme de « U », pour la décharge de tension d'un cadre de connexion électrique monté sur le support (30).

6. Le potentiomètre multi-tours (1) selon l'une quelconque des revendications 1 à 5, l'élément de capture (50) établissant une connexion électrique entre le trajet de résistance et le trajet de collecteur.

7. Le potentiomètre multi-tours (1) selon l'une quelconque des revendications 1 à 6, en l'absence de la seconde partie (20) de boîtier, le trajet de résistance étant au moins en partie accessible, pour procéder à une linéarisation, par retrait de parties du trajet de résistance.

8. Le potentiomètre multi-tours (1) selon l'une quelconque des revendications 1 à 7, en l'absence de la seconde partie (20) de boîtier, le support saillant quelque peu hors de la première partie (10) de boîtier et de ce fait, des parties du trajet de résistance étant accessibles.

9. Le potentiomètre multi-tours (1) selon l'une quelconque des revendications 1 à 8, la première partie (10) de boîtier et la seconde partie (20) de boîtier étant ménagées pour qu'on les soude l'une à l'autre par soudage aux ultrasons.

10. Le potentiomètre multi-tours (1) selon l'une quelconque des revendications 1 à 9, la broche (40) comportant un filetage, lequel coopère avec l'élément de capture (50), de telle sorte que par rotation de la broche (40), l'élément de capture (50) soit déplaçable le long du support (30).

11. Le potentiomètre multi-tours (1) selon l'une quelconque des revendications 1 à 10, la première partie (10) de boîtier et/ou le cas échéant, la seconde partie (20) de boîtier comportant une première butée (15.1, 25.1) et/ou une seconde butée (15.2, 25.2) pour limiter la course de l'élément de capture (50) le long de la broche (40) et de ce fait, également le long du support (30).

12. Le potentiomètre multi-tours (1) selon l'une quelconque des revendications 1 à 11, la première partie (10) de boîtier et/ou le cas échéant, la seconde partie (20) de boîtier comportant une bride (70) destinée à la fixation du potentiomètre multi-tours sur un lieu d'utilisation.

13. Le potentiomètre multi-tours (1) selon l'une quelconque des revendications 1 à 12, la première partie (10) de boîtier et/ou le cas échéant la seconde partie (20) de boîtier étant fabriquées sous la forme de demi-coques en matière plastique, lors d'un procédé de moulage par injection.

14. Un procédé destiné à fabriquer un potentiomètre multi-tours (1) selon la revendication 1 à la revendication 13, lors duquel on insère dans une première partie (10) de boîtier un support (30) et une broche (40) avec un élément de capture (50) monté sur celle-ci et lors duquel on relie par liaison par matière une seconde partie (20) de boîtier avec la première partie (10) de boîtier.

15. Le procédé selon la revendication 14, lors duquel, avant la liaison par matière de la seconde partie (20) de boîtier avec la première partie (30) de boîtier, il est procédé à une linéarisation en ce qu'on déplace l'élément de capture (50) le long d'un ou de plusieurs trajets de résistance du support (30), des valeurs de résistance étant détectées, pour linéariser le potentiomètre multi-tours (1) par retrait de parties de l'un ou des plusieurs trajet(s) de résistance, sur la base des valeurs de résistance détectées.
